# DEMANDE DE BREVET EUROPEEN

(11) **EP 0 965 942 A1**
(43) Date de publication de la demande: **22.12.1999**
(21) Numéro de dépôt: 99401530.3
(22) Date de dépôt: 21.06.1999
(51) Int. Cl.: G06K 7/00

(54) **Lecteur de carte à circuit integré**

(30) Priorité: 22.06.1998 FR 9807833
(71) Demandeur: ALCATEL, 75008 Paris (FR)
(72) Inventeur: Grimaldi, Jean-François, 75015 Paris (FR); Bodin, Jannick, 92380 Garches (FR); Torchet, Pascal, 92110 Clichy (FR)
(74) Mandataire: Lamoureux, Bernard

(57) **Abrégé**

L'invention concerne un lecteur de carte à circuit intégré comprenant un connecteur pour établir une liaison électrique entre des contacts de la carte et des circuits du lecteur, et un interrupteur de fin de course qui permet l'alimentation en énergie électrique du connecteur seulement quand la carte est en fin de course dans son logement. Le lecteur est, par exemple, logé dans un téléphone portable.

Le lecteur comporte des moyens pour qu'en début de course d'extraction de la carte de son logement, ou en fin de course d'introduction de la carte, la vitesse entre la carte (12) et le connecteur soit limitée ou nulle.

Dans une réalisation en début de course d'extraction, ou en fin de course d'introduction, la carte est complètement introduite dans son boîtier (14), et la commande du déplacement de début ou de fin de course est effectuée à l'aide d'un doigt (22), ou analogue, en saillie à l'extérieur du boîtier.

## Description

L'invention est relative à un lecteur de carte à circuit intégré.

Les lecteurs de cartes à mémoire à circuit intégré sont utilisés couramment pour des identifications et des paiements.

Pour sa connexion à la carte, le lecteur comprend un connecteur présentant des pattes ou lames destinées à entrer en contact avec les bornes d'entrée des circuits de la carte. Le connecteur doit être sous tension seulement quand la carte est immobile et installée correctement. En effet, si le connecteur était sous tension quand la carte se déplace, des bornes de cette dernière risqueraient d'être mises en court-circuit, ce qui pourrait détériorer les circuits de la carte.

C'est pourquoi un lecteur de carte à circuit intégré comporte un interrupteur de fin de course qui, lors de l'introduction, met le connecteur sous tension seulement quand la carte est correctement installée et qui, lors de l'extraction, met ce connecteur hors tension dès qu'on commence à retirer la carte.

Pour l'extraction, l'interrupteur de fin de course doit couper immédiatement le circuit d'alimentation du connecteur, même pour des vitesses d'extraction élevées de la carte (jusqu'à un mètre par seconde selon les normes). Cette contrainte implique l'utilisation d'un interrupteur à réaction très rapide et donc onéreux. Elle implique aussi de réaliser le lecteur avec précision, ce qui est également onéreux.

L'invention remédie à ces inconvénients.

Elle est caractérisée en ce que le lecteur comporte un moyen pour annuler ou limiter la vitesse de la carte par rapport au connecteur quand cette carte est proche de sa fin de course d'introduction ou quand la course d'extraction débute.

Pour simplifier l'explication, dans ce qui suit, on se référera surtout à la course d'extraction de la carte. Toutefois, en général, les explications relatives à la course d'extraction s'appliqueront aussi à la course d'introduction de la carte dans le lecteur.

Dans le mode de réalisation préféré de l'invention, la vitesse de la carte par rapport au connecteur est nulle au début de la course d'extraction. A cet effet, le connecteur est mobile avec la carte lors de cette course. On prévoit, par exemple, un support commun au connecteur et à la carte qui coulisse, selon une course limitée, à l'intérieur d'un boîtier.

Dans ce cas, il est avantageux que le support et le connecteur soient solidaires d'une bandé flexible présentant des conducteurs de liaison du connecteur aux circuits du lecteur et/ou aux circuits d'un appareil associé. Dans ce cas l'interrupteur de fin de course est également solidaire de cette bande flexible.

Il est préférable que pendant le début de la course d'extraction, la carte ne puisse être extraite directement par l'utilisateur. A cet effet, durant ce début de course, la carte reste entièrement dans un boîtier, et n'est pas accessible manuellement de l'extérieur. Pour déplacer la carte afin de lui faire effectuer le début de sa course d'extraction (alors que la carte se trouve entièrement dans le boîtier), dans une réalisation, on prévoit un doigt ou ergot en saillie à l'extérieur du boîtier et qui est solidaire d'un support du connecteur et de la carte. Dans le cas où le connecteur n'est pas mobile, le doigt déplace seulement la carte. Ce type de commande du déplacement de la carte à l'aide d'un ergot permet des vitesses d'extraction qui sont plus faibles que celles qu'on peut obtenir en tirant directement à la main une carte. Cette commande constitue donc un moyen pour limiter la vitesse d'extraction au début de la course.

À la fin de la course d'extraction commandée par l'ergot, la carte dépasse du boîtier d'une longueur suffisante pour permettre l'extraction manuelle de cette carte.

L'invention est particulièrement avantageuse pour la réalisation d'un lecteur de carte de type portable, notamment un lecteur de carte associé à un téléphone portable.

D'autres caractéristiques et avantages de l'invention apparaîtront avec la description de certains de ses modes de réalisation, celle-ci étant effectuée en se référant aux dessins ci-annexés sur lesquels :
la figure 1 est une vue schématique en perspective d'un téléphone portable équipé d'un lecteur de carte selon l'invention,
la figure 2 est une vue en coupe selon une ligne médiane longitudinale d'une partie du lecteur du téléphone portable conforme à l'invention,
la figure 3 est une vue en perspective montrant aussi une partie du lecteur de carte et du boîtier du téléphone associé conforme à l'invention, et
la figure 4 est une coupe selon la ligne 4-4 de la figure 2.

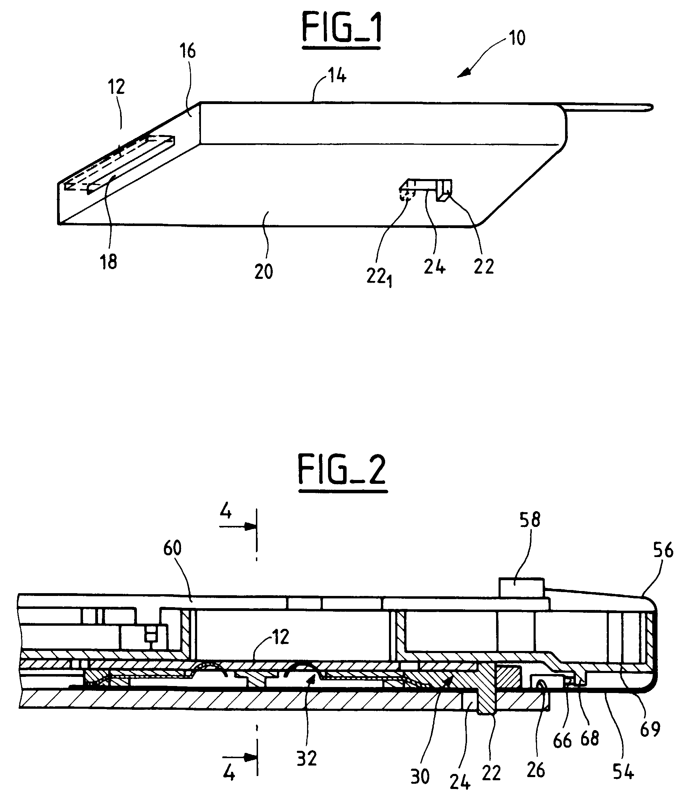

L'exemple de réalisation de l'invention représenté sur les figures est un téléphone portable 10 (figure 1) équipé d'un lecteur de carte 12. De façon classique, la carte 12 constitue un moyen d'identification ainsi qu'un moyen de facturation ou de paiement.

Le boîtier 14 du téléphone portable 10 comporte sur sa tranche arrière 16 une fente 18 de dimensions suffisantes pour permettre l'introduction de la carte 12 mais insuffisantes pour un accès manuel à l'intérieur du boîtier.

De la face inférieure 20 du boîtier 14 est en saillie un doigt 22 solidaire d'un support (décrit plus loin) de connecteur et de carte se trouvant à l'intérieur du boîtier. Ce doigt coulisse dans une lumière 24, de faible longueur, se trouvant vers l'avant dans le fond du boîtier. Il commande le déplacement de la carte 12 quand celle-ci est complètement introduite à l'intérieur du boîtier 14.

Quand la carte 12 n'est pas introduite dans le boîtier, le doigt 22 a la position 22₁ représentée en traits mixtes sur_la figure 1, c'est-à-dire qu'il est à l'extrémité arrière de la lumière 24. Quand la carte 12 a été complètement introduite, le doigt 22₁ est poussé vers l'avant pour prendre la position 22 à l'autre bout de la lumière 24. Dans cette position d'extrémité, qui est représentée sur la figure 2, un interrupteur de fin de course 26 est actionné.

Inversement, quand l'utilisateur désire retirer la carte 12, il pousse le doigt 22 de l'avant vers l'arrière, ce qui fait dépasser la carte de la fente 18 et permet de la retirer par la partie en saillie.

L'actionnement à l'aide du doigt 22 limite les vitesses de déplacement de la carte, comparativement à l'introduction et l'extraction manuelles. Dans ces conditions, les contraintes imposées à l'interrupteur 26 de détection et de commande de fin de course sont moins sévères que pour un interrupteur destiné à équiper un lecteur dans lequel la carte peut être extraite manuellement immédiatement à partir de sa fin de course.

En effet, l'interrupteur 26 doit détecter le début de l'extraction de la carte 12 et commander rapidement la mise hors tension du connecteur du lecteur, afin que, lors du déplacement, les contacts (non représentés) de la carte ne soient pas soumis à des courts-circuits ou tensions qui risqueraient de détériorer les circuits de la carte. Ainsi, le temps de réponse de l'interrupteur 26 doit être d'autant plus court que la vitesse d'extraction de la carte est élevée. Étant donné qu'avec la commande à l'aide du doigt 22, la vitesse d'extraction en début de course est réduite, le temps de réaction de l'interrupteur 26 est moins critique.

Dans le mode de réalisation préféré de l'invention, les contraintes imposées à l'interrupteur 26 sont les plus faibles car la carte 12 est solidaire du même support 30 que celui portant le connecteur 32. Autrement dit, pendant la course du doigt 22 dans la lumière 24, la carte 12 est immobile par rapport au connecteur 32. Ce n'est que lorsque le doigt 22 est dans la position 22₁, complètement repoussée vers l'arrière, que la carte 12 peut être retirée et donc se déplacer par rapport au connecteur 32. Ainsi, le temps de réaction de l'interrupteur 26 doit être égal au temps minimal pour lequel on peut déplacer le doigt depuis la position 22, à l'extrémité avant de la lumière, jusqu'à la position 22₁ à l'extrémité arrière de la lumière.

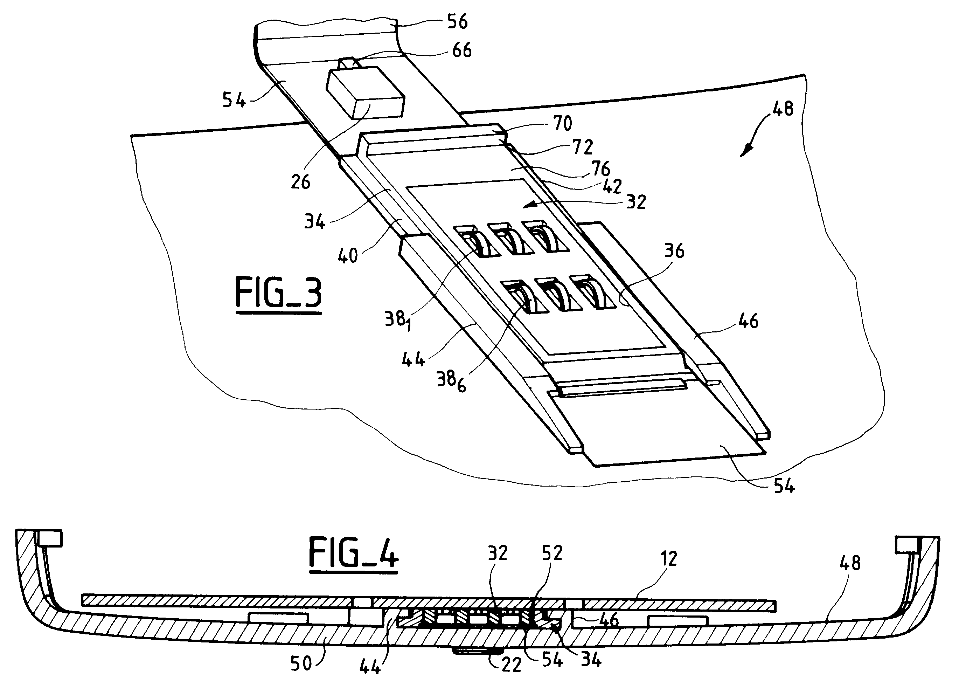

Le support 30 comporte un cadre 34 en matière plastique de forme générale rectangulaire comportant un large évidement central 36 logeant le connecteur 32 qui comprend six lames élastiques 38₁ à 38₆ (figure 3) destinées à entrer en contact avec les contacts correspondants de la carte 12.

Les grands côtés longitudinaux du cadre 34 présentent des coulisseaux 40 et 42 destinés à coopérer avec des glissières, respectivement 44 et 46 (figures 3 et 4), formées sur la face intérieure 48 de la paroi 50 de fond du boîtier 14 du téléphone portable. Dans cet exemple, la paroi 50 est concave vers l'intérieur et les glissières se trouvent de part et d'autre de la ligne médiane de la paroi 50, c'est-à-dire vers le fond de la concavité. Autrement dit le lecteur est logé dans le fond incurvé du boîtier du téléphone portable.

La face inférieure du cadre 34 comporte un évidement 52 (figure 4) dans lequel est logée une bande flexible 54 présentant des conducteurs (non montrés en détail) en surface et sur laquelle est soudé le connecteur 32, les lames 38₁ à 38₆ étant soudées à leurs parties inférieures à un conducteur respectif.

La bande 54 se prolonge, vers l'avant, par un retour 56 relié à un autre connecteur 58 (figure 2) assurant la connexion du connecteur 32 aux composants et aux alimentations du lecteur et du téléphone se trouvant sur une plaquette 60 de circuit imprimé disposée au-dessus du support 30 et parallèlement à ce dernier.

L'interrupteur 26 est également fixé sur le dessus de la bande flexible 54 et ses contacts sont reliés à des conducteurs sur cette bande. Ces derniers conducteurs sont aussi en liaison avec les circuits sur la plaquette 60.

Dans l'exemple, l'interrupteur 26 de fin de course se présente sous la forme d'un bouton poussoir dont le poussoir 66 est disposé vers l'avant et coopère avec une butée 68. Pour l'introduction, la fin de course est représentée par l'enfoncement du poussoir 66 dans son boîtier. Pour l'extraction, le dégagement correspond à un retour du poussoir 66 dans sa position en saillie.

La butée 68 est solidaire d'un capot intérieur 69, par exemple en matière plastique métallisée de façon à constituer aussi un blindage séparant la carte 12 des circuits du téléphone se trouvant sur la plaquette de circuit imprimé 60.

Le cadre 34 comporte, par ailleurs, à sa partie antérieure, un rebord 70 dont la face postérieure 72 constitue une butée pour le rebord avant de la carte 12 qui repose sur la face supérieure principale 76 du cadre.

Lorsque la carte est introduite dans son logement, étant appliquée contre la face 76, elle vient en butée contre le rebord 70. Dans cette position, les contacts, dirigés vers le bas, de la carte, s'appuient contre les contacts correspondants des lames élastiques 38₁ à 38₆.

Dans l'exemple, le doigt 22 se trouve au droit du rebord 70 (figure 2).

## Revendications

1. Lecteur de carte à circuit intégré monté dans un boîtier (14), de préférence un boîtier de téléphone portable, et comprenant un connecteur (32) pour établir une liaison électrique entre des contacts de la carte et des circuits du lecteur, et un interrupteur (26) de fin de course qui permet l'alimentation en énergie électrique du connecteur seulement quand la carte est en fin de course dans son logement, et des moyens pour qu'en début de course d'extraction de la carte de son logement ainsi qu'en fin de course d'introduction de la carte, la vitesse entre la carte (12) et le connecteur (32) soit limitée ou nulle, caractérisé en ce que le lecteur est monté dans le boîtier (14) de manière qu'une carte (12) introduite dans le lecteur est inaccessible de l'extérieur en début de course d'extraction et en fin de course d'introduction et en ce que lesdits moyens comprennent un élément de commande manuelle (22) accessible de l'extérieur du boîtier (14) pour commander le déplacement de la carte en début de course d'extraction et en fin de course d'introduction.

2. Lecteur selon la revendication 1, caractérisé en ce que ledit élément de commande manuelle est un doigt (22), ou analogue, en saillie à l'extérieur du boîtier.

3. Lecteur selon la revendication 1 ou 2, caractérisé en ce qu'il comprend un support (30) pour le connecteur (32) et la carte (12), ce support étant déplaçable en début de course d'extraction et en fin de course d'introduction, afin que, pendant ce début et cette fin de course, la carte soit immobile par rapport au connecteur.

4. Lecteur selon la revendication 3, caractérisé en ce qu'il comporte une bande flexible (54) portant des conducteurs de liaison du connecteur (32) aux circuits du lecteur.

5. Lecteur selon la revendication 4, caractérisé en ce que l'interrupteur de fin de course (26) est solidaire de la bande flexible (54).

6. Lecteur selon l'une quelconque des revendications 3 à 5, caractérisé en ce que le support (30) comporte un cadre, présentant un évidement central (36) pour loger le connecteur (32) et une surface supérieure (76) de réception de la carte (12) avec une butée (72) pour l'extrémité antérieure de la carte.

7. Lecteur selon les revendications 2 et 6, caractérisé en ce que le doigt (22) est solidaire du cadre (34).

8. Téléphone portable caractérisé en ce qu'il comporte un lecteur selon l'une quelconque des revendications précédentes.

9. Téléphone selon la revendication 8, caractérisé en ce qu'il comporte un boîtier dont le fond (50) est incurvé et en ce que le connecteur et la carte sont logés dans le fond incurvé.
